# EUROPEAN PATENT APPLICATION

(11) **EP 1 757 792 A1**
(43) Date of publication of application: **28.02.2007**
(21) Application number: 05107710.5
(22) Date of filing: 23.08.2005
(51) Int. Cl.: F02D 41/22, B60K 28/14, F02M 63/02

(54) **Fuel pump controller**

(71) Applicant: Inergy Automotive Systems Research (SA), 1120 Bruxelles (BE)
(72) Inventor: Grant, Eric, Ypsilanti, MI 48197 (US); McCleary, Ryan, White Lake, MI 48386 (US); Behar, Ron, South Lyon, MI 48178 (US); Hill, David, Commerce Township, MI 48382 (US); McCleary, Scott, White Lake, MI 48386 (US); Mehta, Saurin, Troy, MI 48083 (US)
(74) Representative: Jacques, Philippe

(57) **Abstract**

Fuel pump controller is integrated to a fuel system control unit (FSCU) (5), and communicates with an engine control unit (ECU) (1) and/or crash sensors (2,3) through communication means (4). The controller comprises means (6) for generating a fuel pump control signal. Said means use data on crash occurrence from the ECU (1) or from said crash sensors (2,3) for turning off a fuel pump or limiting fuel pump speed in case of crash.

## Description

The present invention relates to a fuel pump controller.

During a vehicle crash there is risk of fuel leakage and explosion as a result of damage to a section of a fuel system that is pressurized with fuel. Another potential problem during a crash is a break in the fuel system allowing oxygen to enter a fuel tank and the space surrounding a fuel pump. The addition of oxygen to the pump environment may cause an explosion if the pump continues to operate after a crash that causes fuel system damage.

In the DE 31 16 867 A1 patent application the fuel pump is switched off when a signal from an inertia switch (e.g. airbag retardation sensor) or other crash detection device is triggered if the motor vehicle is involved in a crash. In this case, a mechanical relay is required to provide the switching.

US 5,291,578 patent reveals an electronic fuel pump controller (based purely on discrete hardware - no software content) that is given a hard wire input from an inertia switch sensor and utilizes it to remove power from the fuel pump in the event of a crash. This solution does not allow for multiple crash detection sensors, communication over a data network such as CAN, or software configurable actions when the switch is tripped (i.e. a delay or other algorithm to do something other than simply turn off the fuel pump).

US patent 5,777,285 describes a mechanical inertia switch designed purely to mechanically interrupt electrical current when a force exceeding a certain threshold is exerted upon the vehicle (i.e. upon the occurrence of a rapid change in the acceleration of the vehicle e.g. a crash).

The above mentioned solutions require expensive mechanical components and/or extra wiring with less flexibility.

In applicant's invention, when a crash condition is detected and communicated to a FSCU (Fuel System Control Unit), a software immediately analyses the situation and reacts by turning off or restricting fuel pump current.

One result is that configurability is increased through the ability to change algorithms in the FSCU relating to control of the fuel pump during a collision event. This allows for the same hardware to be used in many different vehicle environments - and even may allow for a low cost fix in the event a vehicle safety problem arises (where in other situations, a recall and replace of an associated unit may occur).

The number of required wires decrease through the ability to use a data communication network, such as CAN or LIN, resulting in lower cost.

Multiple crash sensors may be used to provide input to the algorithm that controls the fuel pump in a crash. If variable output sensors (measuring the severity of a crash) are available, they may be used to provide varying degrees of response.

Cost is reduced by using existing components within an intelligent fuel system (i.e. comprising a FSCU and data network connection), and eliminating the need for other components (fuel pump relay, discrete wires, mechanical inertia switch).

The present invention relates to a fuel pump controller integrated to a fuel system control unit (FSCU), and communicating with an engine control unit (ECU) and/or crash sensors through communication means; said controller comprising means for generating a fuel pump control signal; said means using data on crash occurrence from the ECU or from said crash sensors for turning off a fuel pump or limiting fuel pump speed in case of crash.

According to the invention the fuel pump controller is integrated to a fuel system control unit (FSCU). The FSCU can manage the operating conditions and functioning parameters of a fuel system.

The FSCU generally
■ has means for controlling functions of the fuel system,
■ is connected with at least one fuel system component to send signals or receive signals from said at least one fuel system component,
■ is connected with at least one sensor that sends signals to the FSCU and/or the ECU,
■ is adapted to electronically and bi-directionally communicate with the ECU.

The FSCU is a standalone controller, different from the ECU and which has taken over the control of the fuel system from the ECU, i.e. the ECU doesn't directly control the fuel system any longer. The FSCU communicates with the ECU also for indication of any fuel system failure to the ECU.

Reliability is increased by segmenting control of the fuel system away from the ECU, reducing load on the ECU.

In general, the fuel system integrates a fuel tank and among other components, a fuel pump (which draws fuel from the fuel tank and discharges fuel from the fuel tank through an opening in the fuel tank wall), a fuel vapour canister (through which any air or fuel vapour received into or discharged out of the fuel tank travels), one or several vapour or roll-over-valves (communicating with the fuel vapour canister) or any other fuel system component. The FSCU controls the operation of all these components during normal and transient operating conditions of the engine, receives data on the operating parameters and sends information to make the component function. In general this control was previously made by the ECU or by component-dedicated electronic controllers (for instance, specific controllers exist for fuel pump management). The burden of controlling the fuel system is switched to the FSCU.

Crash information may be transmitted to the FSCU over a data network either from the ECU (or any other control unit) or directly from crash sensors through other communication means.

In particular crash information may be transmitted from discretely wired inputs or through an integrated sensing mechanism.

Crash sensors may provide the severity of a vehicle collision or other similar event. In that circumstance the controller can choose a limp home mode or a variable response to control the fuel pump.

Preferably the FSCU is electronically connected to sensors integrated in the fuel system. Among fuel system sensors there are generally a fuel level sensor, a temperature sensor, a pressure sensor, a hydrocarbon vapour sensor, one or several on-board-diagnostic (OBD) sensors. Other types of sensors can be part of this list. They are connected to the FSCU by appropriate electric wires through which sensors transmit data to the FSCU.

The FSCU may receive information from and send information to a plurality of vehicle control systems including the ECU through a limited number of wires. The information exchanged between the FSCU and the ECU includes for instance the quantity of fuel in the fuel tank (returned from the fuel level sensor), the injector pulse width (indicating how much fuel has to be injected), a signal indicating if purge conditions for the canister are met, ...

The FSCU may also receive signals from OBD sensors used to determine if there are any fuel system component failures or failures in the evaporative emission control system which may be indicated, for example, by liquid fuel leakage or pressure losses in the system. These failure conditions may result in the discharge of liquid fuel or hydrocarbon vapours from the fuel system. OBD sensors may also indicate vacuum conditions in the fuel tank.

According to the invention the controller comprises means using data from the ECU for calculating a desired fuel pressure and a fuel speed, and means for generating a fuel pump control signal.

In particular these means use variable speed control to calculate fuel pump speed in case of normal function.

In a particular embodiment the ECU uses data on crash occurrence from crash sensors.

A crash sensor can be in particular a retardation sensor of an airbag.

In a particular embodiment of the invention the FSCU comprises a controller with software base proportional-derivative-integral (PID) algorithm that changes the fuel pump control signal. This signal controls the power provided to the fuel pump. The PID algorithm takes the proportion of an error, the integral of the error (total error over time), and the derivative of error (rate of error change) and combines them to modify the output to eliminate the error.

Data used for calculating the desired fuel pressure generally comprises throttle position, engine load, engine coolant temperature, air charge temperature, and any other available signal on a vehicle communication bus. Input of throttle position and engine load may be abstracted regardless of sensors used and sent over a network bus of an OEM's (original equipment manufacturer) choice. Targeted fuel pressure and current fuel pressure will then be sent back to the ECU so that any adjustments in engine operation can then be made.

In particular the controller comprises power driver means responsive to said pump control signal for generating a power electrical signal to a fuel pump.

In an embodiment of the present invention the FSCU controls the application of electrical power to the fuel pump thanks to a pulse-width-modulated current that is generated according to any request from the ECU for fuel delivery to the fuel injectors. Accordingly, there is at least one analog pressure sensor in communication with the fuel pump outlet to provide the FSCU with an indication of the fuel pump output pressure.

The FSCU may also comprise other controlling functionalities beside that of controlling the fuel pump.

The controlling functionalities may comprise on-board diagnostics and venting.

The FSCU may also control the vapour management in the fuel system. As already mentioned, the purging of the fuel vapour canister may be under the control of the FSCU. This control can be dealt with through a purge control valve (e.g. three-way switching valve embodied in a solenoid actuator) that allows communication between the canister and the engine air intake system. The actuator opens the purge control valve under a predetermined operating condition of the engine to connect the canister and the air intake system, thereby generating a purge gas flow through the canister.

According to another particular embodiment of the invention, the FSCU also comprises components in particular for providing indication of a refueling event of the fuel tank, to control vapour venting of the fuel system, to control an additive dosing system and to control a capless fill head.

The FSCU advantageously also communicates with the ECU preferably via the vehicle CAN bus since this communication medium is less sensitive to electronic bugs. Through this multiplex bus, the ECU sends messages to the FSCU to enable the fuel pump, to control the output pressure of the fuel pump if a variable speed fuel pump is provided, to disable the fuel pump in the event of a vehicle accident, to control the purging of the vapour canister, to indicate the ambient temperature, to indicate the engine temperature and to request information from one or more sensors such as OBD sensors.

It is preferred that the FSCU is a low power microprocessor, e.g. with a voltage of 5V. This type of microprocessor may have advantageously the following allocations: a ROM of 128 kilobytes, a volatile memory of 4 kilobytes and a non-volatile memory of 2 kilobytes.

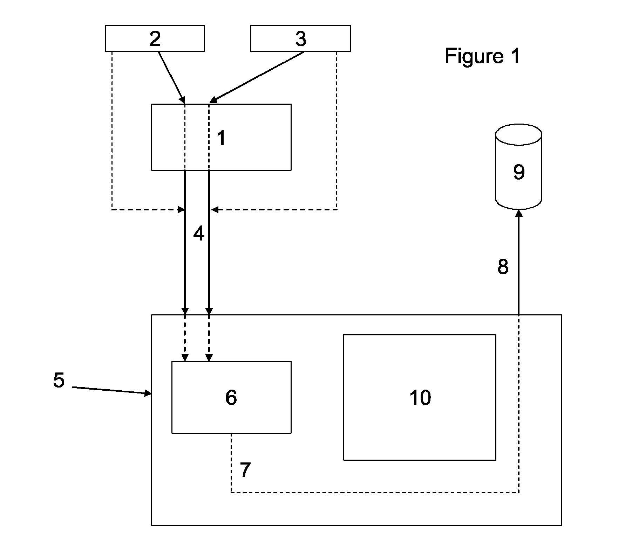

Figures 1 illustrates the subject matter of the invention but is not to be construed as limiting its scope.

An airbag crash sensor (2) and/or other crash sensors (3) exist to provide a signal during a collision or other similar event. This signal may be connected to an ECU (1) of a vehicle or transmitted directly onto a data communication network. A FSCU (5) reads this information via a data communication bus or hard wires (4). Once received, the FSCU interprets signals (6). If the signal is interpreted as a crash condition, the value for the fuel pump speed control is overridden to be completely off or at a very low level (limp home mode) (7). This signal is translated to a pump (9) via power control circuitry to provide the low speed power or to remove power (8).

## Claims

1. - A fuel pump controller integrated to a fuel system control unit (FSCU) (5), and communicating with an engine control unit (ECU) (1) and/or crash sensors (2)(3) through communication means (4); said controller comprising means (6) for generating a fuel pump control signal; said means (6) using data on crash occurrence from the ECU (1) or from said crash sensors (2)(3) for turning off a fuel pump or limiting fuel pump speed in case of crash.

2. - Controller according to claim 1, wherein said means (6) use variable speed control to calculate fuel pump speed in case of normal function.

3. - Controller according to anyone of claims 1 or 2, wherein the ECU (1) uses data on crash occurrence from crash sensors (2)(3).

4. - Controller according to claim 3, wherein at least one sensor is an airbag crash sensor.

5. - Controller according to anyone of claims 1 to 4, comprising power driver means responsive to said pump control signal for generating a power electrical signal to a fuel pump.

6. - Controller according to claim 5, where said power electrical signal is varied utilizing a pulse-width modulation (PWM) variable duty cycle signal.

7. - Controller according to anyone of claims 1 to 6, where the FSCU comprises other controlling functionalities beside that of the fuel pump controlling.

8. - Controller according to claim 7, where said controlling functionalities comprise on-board diagnostics (OBD) and venting.

9. - Controller according to anyone of claims 7 to 8, wherein the purging of a fuel vapour canister is under the control of the FSCU.

10. - Controller according to anyone of claims 1 to 9, wherein the FSCU also comprises components for providing indication of a refueling event of a fuel tank, to control vapour venting of a fuel system, to control an additive dosing system or to control a capless fill head.

11. - Controller according to anyone of claims 1 to 10, wherein the controller communicates with the ECU via a CAN bus.
